# EUROPEAN PATENT SPECIFICATION

(11) **EP 3 108 624 B1**
(45) Date of publication and mention of the grant of the patent: **25.12.2019**
(21) Application number: 14706026.3
(22) Date of filing: 21.02.2014
(51) Int. Cl.: H04L 12/715, H04L 12/725

(54) **A METHOD AND APPARATUS FOR PATH CALCULATION IN A MULTI-LAYER NETWORK**
VERFAHREN UND VORRICHTUNG ZUR BERECHNUNG EINES PFADES IN EINEM MEHRSCHICHTIGEN NETZWERK
PROCÉDÉ ET APPAREIL DE CALCUL DE TRAJET DANS UN RÉSEAU MULTICOUCHE

(43) Date of publication of application: 28.12.2016
(73) Proprietor: Telefonaktiebolaget LM Ericsson (publ), 164 83 Stockholm (SE)
(72) Inventor: IOVANNA, Paola, I-56100 Pisa (IT); UBALDI, Fabio, I-56100 Pisa (IT)
(74) Representative: Brann AB
(86) International application number: PCT/EP2014/053423
(87) International publication number: WO 2015/124200

(56) References cited:
- EP-A1- 1 863 235
- WO-A1-2012/013216
- KOHEI SHIOMOTO (NTT) DIMITRI PAPADIMITRIOU (ALCATEL-LUCENT) JEAN-LOUIS LE ROUX (FRANCE TELECOM) MARTIN VIGOUREUX (ALCATEL-LUCENT): "Requirements for GMPLS-Based Multi-Region and Multi-Layer Networks (MRN/MLN); draft-ietf-ccamp-gmpls-mln-reqs-11.txt", 20080528, vol. ccamp, no. 11, 28 May 2008 (2008-05-28), XP015055757, ISSN: 0000-0004
- FARREL OLD DOG CONSULTING J-P VASSEUR CISCO SYSTEMS A ET AL: "A Path Computation Element (PCE)-Based Architecture; rfc4655.txt", 20060801, 1 August 2006 (2006-08-01), XP015047407, ISSN: 0000-0003

## Description

### Technical Field

Aspects of the invention relate to a method and apparatus for path calculation in a multi-layer network.

### Background

A network may comprise multiple layers. It may be advantageous to optimize network resource utilization, taking into account all layers rather than optimizing resource utilization at each layer independently. This provides for improved network efficiency to be achieved through a process termed inter-layer traffic engineering. A Path Computation Element (PCE) may be used for such inter-layer traffic engineering.

As described in IETF RFC 5623, the multiple layers of a network may represent separations of technologies, e.g., packet switch capable (PSC), time division multiplex (TDM), or lambda switch capable (LSC), separation of data plane switching granularity levels (e.g., PSC-1, PSC-2, VC4, or VC12) and/or a distinction between client and server networking roles.

Different approaches for path computation are described in IETF RFC 5623, for example a single PCE which is aware of all detailed information of multiple layers or a cooperation of multiple PCE where each one is aware of the information of a single layers. The latter approach is referred as client-server architecture. A client-server architecture is used when the two layers are provided by different vendors. In this case, each vendor provides a separate PCE tool and a cooperation between them is needed.

WO 2012/013216 describes a method and a device for conveying information in a network, wherein a first instance of the network determines a path information within a sphere of the first instance; and wherein the path information is conveyed to a second instance of the network. Furthermore, a communication system is suggested comprising at least one such device.

EP 1 863 235 A1 describes a method for multi-domain route computation in a hierarchical network model, wherein upper layer Path Computation Element (PCE) computes a route between computation domains of corresponding lower layer PCEs, according to bandwidth information of nodes associated with lower layer PCEs.

The multi-layer path computation, for example, in the case of client-server architecture is needed to optimize resources. Aspects of the invention provide an efficient way to compute a multi-layer path in a multi-layer network.

### Summary

A first aspect of the present invention provides a method of calculating a path in a first layer of a multi-layer network. The method comprises receiving information corresponding to one or more parameter from a second layer of the multi-layer network. The one or more parameter relates to a summarization of links between edge nodes of the second layer connected with the first layer. The method further comprises calculating a path in the first layer using the received information from the second layer.

Thus, path calculation in a multi-layer network is improved.

A second aspect of the present invention provides an apparatus configured to determine a path in a first layer of a multi-layer network. The apparatus comprises a receiving unit configured to receive information corresponding to one or more parameter from a second layer of the multi-layer network. The one or more parameter relates to a summarization of links between edge nodes of the second layer connected with the first layer. The apparatus further comprises a path calculation unit configured to calculate a path in the first layer using the received information of the second layer.

Optionally, the apparatus is in a client-server multi-layer network, wherein the first layer is a client layer and the second layer is a server layer.

Optionally, the receiving unit is configured to receive the information via an edge node of the second layer.

Optionally, a said parameter is one or more: a bandwidth, a Quality of Service, a protection information type, or a bandwidth granularity, between the edge nodes of the second layer.

Optionally, the path calculation unit configured is configured to calculate a bandwidth granularity of the second layer.

A third aspect of the present invention provides a method of a second layer of a multi-layer network. The method comprises obtaining information corresponding to one or more parameter of the second layer, and summarizing the information on links between edge nodes of the second layer connected with the first layer. The method further comprises transmitting the summarized information corresponding to the one or more parameter to a first layer of the multi-layer network, wherein the information is useable for calculating a path in the first layer.

Optionally, the method is in a client-server multi-layer network, wherein the first layer is a client layer and the second layer is a server layer.

Optionally, the method comprises transmitting the information from an edge node of the second layer.

Optionally, an entity of the second layer obtains the information corresponding to one or more parameter of the second layer, and summarizes the information on links between edge nodes of the second layer. The transmitting comprises the entity further transmitting the summarized information corresponding to the one or more parameter to edge nodes of the second layer.

Optionally, a said parameter is one or more: a bandwidth, a Quality of Service, a protection information type, or a bandwidth granularity, between the edge nodes of the second layer.

Optionally, the information corresponding to one or more parameter is transmitted by the second layer over a User Network Interface, UNI, to the first layer.

Optionally, the information corresponding to one or more parameter is transmitted by the second layer using a Path Calculation Entity Protocol, PCE-P, to the first layer.

Optionally, the path is calculated in the first layer by a first Path Calculation Entity, PCE, and a path is calculated in the second layer by a second Path Calculation Entity, PCE.

A fourth aspect of the present invention provides an apparatus configured to provide information of a second layer of a multi-layer network. The apparatus comprises a receiving unit configured to obtain information corresponding to one or more parameter of the second layer, and a calculation unit configured to summarize the information on links between edge nodes of the second layer connected with the first layer. The apparatus further comprises a transmission unit configured to transmit the summarized information corresponding to the one or more parameter to a first layer of the multi-layer network. The information is useable for calculating a path in the first layer.

Optionally, the apparatus is in a client-server multi-layer network, wherein the first layer is a client layer and the second layer is a server layer.

Optionally, the transmission unit is configured to transmit the summarized information corresponding to the one or more parameter to edge nodes of the second layer.

Optionally, a said parameter is one or more: a bandwidth, a Quality of Service, a protection information type, or a bandwidth granularity, between the edge nodes of the second layer.

Optionally, the path is calculated in the first layer by a first Path Calculation Entity, PCE, and a path is calculated in the second layer by a second Path Calculation Entity, PCE.

A fifth aspect of the invention provides a control plane protocol of a first layer of a multi-layer network. The protocol is configured to carry the information corresponding to one or more parameter from a second layer of the multi-layer network. The one or more parameter relates to a summarization of links between edge nodes of the second layer connected with the first layer. The information is useable for calculating a path in the first layer.

Optionally, the control plane protocol is in a client-server multi-layer network, wherein the first layer is a client layer and the second layer is a server layer.

Optionally, the control plane protocol receives the information from an edge node of the second layer.

Optionally, the control plane protocol carries a said parameter which is one or more: a bandwidth, a Quality of Service, a protection information type, or a bandwidth granularity, between the edge nodes of the second layer.

Optionally, the control plane protocol receives information corresponding to one or more parameter over a User Network Interface, UNI, from the second layer.

Optionally, the control plane protocol receives information corresponding to one or more parameter by a Path Calculation Entity Protocol, PCE-P, from the second layer.

A sixth aspect of the present invention provides a computer program product, configured when run on a computer to conduct a method according to any aspect of the invention.

The invention is defined by the appended claims.

### Brief Description of the drawings

Embodiments of the present invention will now be described, by way of example only, with reference to the accompanying drawings in which:
Figure 1 shows an example of a network according to an example of the invention;
Figure 2 shows an example of the network according to a further aspect of the invention;
Figure 3 shows a flowchart illustrating steps according to an example of the invention;
Figure 4 shows a flowchart illustrating steps according to a further example of the invention,
Figure 5 shows an apparatus according to an example of the invention, and
Figure 6 shows an apparatus according to a further example of the invention.

### Detailed description

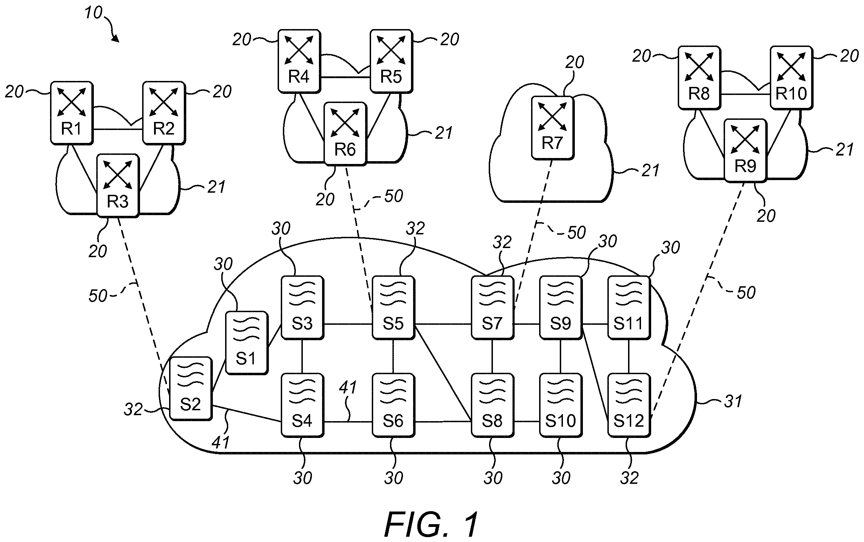

Figure 1 shows an example network 10. The network 10 is a multi-layer network. The network 10 comprises a first layer and a second layer. The network 10 may have a client-server architecture, for which the first layer may be termed a client layer and the second layer be termed a server layer.

The network 10 comprises client nodes 20 and server nodes 30. The client nodes 20 are arranged in a plurality of client domains or networks 21. In some examples, the client nodes 20 are routers, e.g. packet or IP routers.

One or more client nodes 20 are connected to another one or more client nodes 20 of a different client domain 21 by the server nodes 30. A group of server nodes 30 may be considered as forming a server network 31, also referred to as a server layer network or server domain.

The client network may be considered as a client of an underlying server or transport network 31 provided by the server nodes 30. The server network may be an optical network, e.g. wavelength division multiplexed (WDM) network, for example, a dense WDM (DWDM) network. Any type of node may alternatively be referred to as a network element. Figure 1 shows the physical topology of the server network 31.

The server nodes 30 are connected by one or more links 41, e.g. optical links (fiber). The server nodes 30 define a transport network, and in particular, an optical transport network. The server nodes 30 may be considered as forming an optical server network.

The server nodes 30 are configured for optical switching of WDM signal. In some examples, the server nodes 30 are configured to switch at the wavelength layer, e.g. lambda switching. In some examples, the server nodes 30 are optical add-drop multiplexers, e.g. reconfigurable optical add-drop multiplexer (ROADM) or remotely reconfigurable add/drop multiplexer (RROADM), or optical cross-connect (OXC) switches.

A plurality of server nodes 30 function as edge nodes 30. Such edge nodes 32 are arranged to directly communicate with a client node 20. The edge nodes 32 are also server layer nodes 30. The edge nodes 32 provide entry and exit points for traffic into and from the server layer network 31. For example, traffic from client layer node R1 to node R4 uses the server layer to transport the traffic. In this example, the traffic is handled by edge nodes S2 and S5.

In some examples, the server nodes 30 are controlled by a management plane, e.g. network management system (NMS). In some aspects, the client nodes 20 are not controlled by the same NMS.

The plurality of server nodes 30 and client nodes 20 can be considered as an Automatic switched-transport network (ASON). In some aspects the network uses Generalized Multiprotocol Label Switching (GMPLS). In some aspects, the arrangement may be considered as an overlay model. The overlay model is described in IETF RFC 4208 and in IETF INTERNET DRAFT draft-beeram-ccamp-gmpls-enni-00.

A service across the lower layer network (server network) is requested over a distinct service interface by the higher layer network (client network). Once the lower layer service has been established, it can be used as a tunnel or as a stitched LSP to support the requirements of the higher layer network. In this sense, layer refers to a network service layering, e.g. client/server. Aspects of the invention relate to a multi-layer network.

In some examples, the server network and client network utilise different control planes and different provisioning techniques. For example, the core network uses a Generalized Multiprotocol Label Switching (GMPLS) control plane, and/or the client network utilises MPLS signalling. GMPLS defines both routing and signaling protocols for the creation of Label Switched Paths (LSPs).

The server nodes 30 are controlled by an automated control plane. The functioning of the GMPLS control plane is adapted according to examples of the invention. The client nodes 20 do not share a control plane with the server nodes 30. In some aspects, the server nodes 30 provide for connection-orientated transport. In some examples, the client and server networks use different technologies. For example, the client network is a packet network and the server network is an optical network. In some aspects, examples of the invention correspond to a client-server architecture among heterogeneous technologies.

In some examples, the server network uses a different switching technology than the client network. For example, the server network comprises wavelength (lambda) switches. Aspects of the invention relate to a server layer which is a WDM network. In some examples, the client layer is an IP network.

The client/server network architecture is different from a hierarchical routing (e.g. hierarchical LSPs). For example, the service is directly requested from the server network (in the form of a User-Network Interface (UNI)). In some aspects, the server network connects elements (or segments) of the client network, whereas a hierarchical routing would build tunnels across only the server network (i.e. between the server nodes at the edges of the server network).

Communication between the control plane of the client nodes 20 and control plane of the server nodes 30 (i.e. edge nodes 32) is through a User-Network Interface (UNI) 50.

In some example, the UNI is a reference point defined for the ASON. Further details of the UNI are described in IETF RFC 4208 and in IETF INTERNET DRAFT draft-beeram-ccamp-gmpls-enni-00. Signaling is defined across the UNI 50. The network 10 is an example of a UNI reference network between e.g. a IP/MPLS network and e.g. a WDM network. In some examples, GMPLS is used as a control plane of the transport (server) network, and communicates with the client network control plane via the UNI interface.

Examples of the invention relate to a network in which separate PCEs each calculate paths in the separate layers. As such, there is a separate PCE for each of two or more layers in a multi-layer network. For example, a first PCE calculates a path in the first layer (client layer). A second PCE calculates a path in the second layer (server layer). In some examples, the first PCE and second PCE independently calculate paths in their respective layers. For example, the first PCE is not in communication with the second PCE.

In some examples, aspects of the invention apply in a client-server architecture using a plurality of technologies (e.g. packet and optical). The multi-layer path computation is based on the cooperation of PCEs.

Aspects of the invention provide a method to represent the server network topology towards the client layer. This allows an improvement in the optimization of the multi-layer computation. In some aspects, one or more parameter of the server network is provided to the client network. The one or more parameter is usable to calculate a path in the first (client) layer, taking into account the second (server) layer. In some examples, the one or more parameter of the server layer is used by a client layer PCE to calculate a path in the client layer.

One or more of the parameters provide a summarization of the resources of the server layer. The summarized information of the parameter allows the client layer PCE to calculate a client layer route considering the server layer, without having to obtain detailed information about the server layer. This provides for efficient and improved end-to-end path calculation. The one or more parameter is information about the second layer, which is provided to the first layer in order to carry out a path calculation in the first layer. The path calculation in the first layer considers the second layer topology, e.g. in terms of traffic engineering, for example, bandwidth, QoS or protection type. Aspects of the invention relate to providing between layers summarized topology information for multi-layer routing.

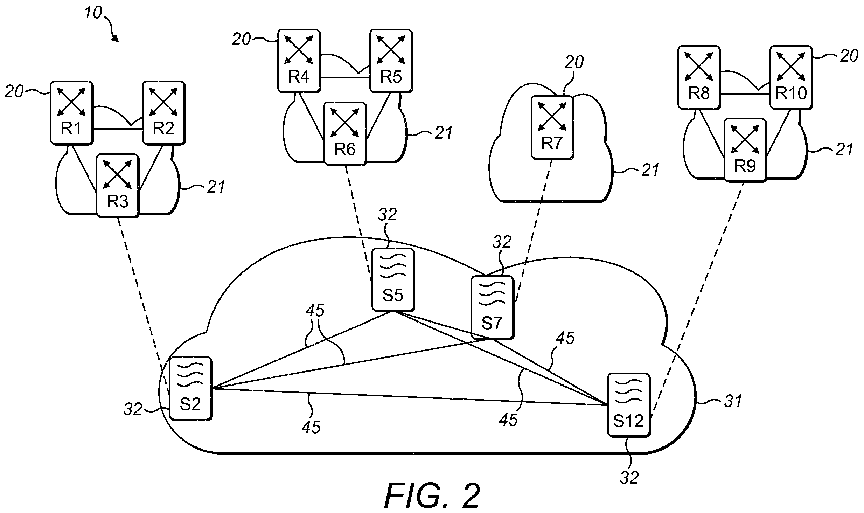

Figure 2 shows the same network 10 as shown in Figure 1. In Figure 2, the server network 31 is illustrated with summarized or logical links 45 between the edge nodes 32. The underlying physical connection of all the nodes 30 of the server network is not included in this abstraction. The one or more parameter corresponds to the summarized or logical links 45 between the edge nodes.

The server domain may have internal resources organized to have a full mesh connectivity among the edge nodes 32 (e.g. nodes S2, S5, S7 and S12) as shown.

In some examples, one of such parameters indicates a representation of the server layer topology. An example of the parameter is the amount of bandwidth between the edge nodes of the server domain. The amount of bandwidth indicates the bandwidth of the summarized or logical links between the edge nodes. The parameter provided to the client layer relates to the logical connectivity shown in Figure 2. The parameter provided to the client layer does not relate to the physical connectivity shown in Figure 1. The parameter may be considered a summarized bandwidth. This allows the client layer path calculation to use server network edge nodes 32 which are connected by a particular bandwidth.

In some aspects, the parameter provided to the client layer 21 relates only to information of the server layer which is relevant to the client layer in providing a client layer path calculation. In some examples, the additional one or more parameter of examples of the invention does not include information which is not relevant to the path calculation in the client layer.

A further example of a parameter provided from the server layer for client layer path calculation is a quality of service (QoS) support in the server layer. The parameter indicates a highest QoS available in a particular part of the server layer. The QoS parameter is indicated for the summarized or logical links between the edge nodes. The parameter may be considered a summarized QoS. This allows the client layer path calculation to use server network edge nodes which are connected by a particular QoS support.

A further example of a parameter provided from the server layer for client layer path calculation is a resiliency feature. The resiliency feature is an indication of a type of resiliency, and may be referred to as a resiliency type or protection type. Examples of resiliency type are: protected, recovered, not protected. Other examples of resiliency type may be used. The resiliency parameter is indicated for the summarized or logical links between the edge nodes. The parameter may be considered a summarized resiliency type. This allows the client layer path calculation to use server network edge nodes which are connected by a particular resiliency type.

Table 1 below shows an example of parameters and the related information which is transmitted for the use of client layer path calculation, i.e. transmitted to a client layer PCE. These parameters provide an indication of the internal resource organization between edge nodes of the server domain.

The parameters described may be combined with existing parameters for client-server architecture (e.g. the parameters described in IETF INTERNET DRAFT draft-beeram-ccamp-gmpls-enni-00) to enable the client PCE to compute a more efficient multilayer paths. For example, Shared Risk Link Group (SRLG) and Mutually Exclusive Link Group (MELG) extensions proposed in IETF INTERNET DRAFT draft-beeram-ccamp-gmpls-enni-00 may be used with resiliency information as described. For example, this allows the client PCE to provide a protection path by the choice of a protected EN link or the selection of two SRLG/MELF disjoint virtual TE links.

**Table 1**

| EN Link | EN total bandwidth (Mbit/s) | QoS | Resiliency |
|---|---|---|---|
| S2-S5 | 40 | 1 | Protected |
| S2-S7 | 30 | 2 | Recovered |
| S2-S12 | 20 | 1 | Protected |
| S5-S7 | 30 | 1 | Unprotected |
| S5-S12 | 60 | 1 | Protected |
| S7-S12 | 20 | 1 | Unprotected |

In this example, the information provided is for the parameters of bandwidth, QoS and resiliency type. As described above the information is for logical links between edge nodes. In this case there are four edge nodes S2, S5, S7, S12.

The one or more parameters may be communicated from the second layer to the first layer according to any suitable means. For example, the parameters may be communicated over the UNI, or using PCE-P. Alternatively, a routing protocol may be used, e.g. Border Gateway Protocol (BGP), BGP Link State (BGP-LS) or a generic external routing protocol. The protocol used may be according to the client-server architecture. Aspects of the invention are applicable to a PCE which is considered as stateless or stateful.

In some examples, the server layer 31 generates the summary of the internal resources between the edge nodes which link the server domain to the client domain. This summary defines the value of the parameter, e.g. amount of bandwidth, QoS, resiliency which is provided by the server domain. In particular, a node or entity associated with the server layer 31 generates the summary of the client layer internal resources between the client layer edge nodes which link the server domain to the client domain. For example, the entity in charge of this task may be one (or more) of: a centralized entity, a distributed entity, the server layer PCE, the operator policy, NMS or SDN controller.

In some aspects, the parameter information may be flooded among edge nodes of the server domain. The flooding provides all of the edge nodes with all of the summarized information (i.e. for all the logical links) in the server domain. The flooding may use an existing routing protocol, e.g. OSPF, IS-IS.

A further example of a parameter provided from the server layer 31 for client layer path calculation is a bandwidth granularity. The bandwidth granularity indicates the granularity of the bandwidth in the server domain, in particular, the granularity of the bandwidth between edge nodes. The bandwidth granularity parameter is indicated for the summarized or logical links between the edge nodes. This allows the client layer path calculation to use server network edge nodes which are connected by a particular bandwidth granularity.

In a further example, information relating to the internal organization of the server layer may be derived by the client layer. For example, the bandwidth granularity of the server layer between edge nodes is derived by the client layer. In some examples, the client layer may use knowledge of the technology of the server layer and/or information received as one or more parameter described, to calculate the bandwidth granularity. For example, the client layer derives the granularity among the edge nodes considering the total amount of bandwidth and the speed transmission.

In examples where the server layer is an optical network, the available bandwidth among the edge nodes 32 is organized in lightpaths (e.g. wavelengths) that represents the maximum granularity the traffic can be transported without splitting. For example in case the server layer is based on optical technology, the client layer derives the number of lightpaths among the edge nodes considering the total amount of bandwidth and the speed transmission.

While the EN connections are used the information described is sent to the client layer according to any suitable means. For example, the information is sent on the control plane. On the basis of the information received (e.g. one or more of bandwidth, QoS, resiliency, granularity) the client layer PCE is able to select the best end-to-end path, with suitable selection of the edge node on the server layer.

In some aspects, examples of the invention apply to the server layer PCE. The examples described may be considered as avoiding complicating the task of the server layer. This allows a more efficient multi-layer computation.

Aspects of the invention provide for multi-layer PCE improvement. This is achieved whilst keeping separated PCEs and client-server architecture. The path computation is improved with the availability of potential and/or real paths comprising the server layer topology. The information (i.e. parameters described) may be provided in protocol extensions, which has only a soft impact on the installed nodes.

Aspects of the invention comprise a control plane protocol configured to carry the information of the one or more parameters. The protocol is configured to carry the additional information corresponding to one or more parameter from a first layer (server layer) to a second layer (client layer) of the multi-layer network, as described. Further aspects of the invention comprise a UNI or protocol configured to carry the information of the one or more parameters. The control plane protocol may be used at the UNI. Aspects of the invention are arranged to augment the UNI 50. Aspects of the invention are configured to pass particular additional information from the server nodes (e.g. WDM layer) to the client nodes (e.g. IP layer). The additional information passed enables better path computation, since topology information of the server layer is considered as an additional constraint.

The control plane of the client network is provided with information (e.g. over the UNI 50) which is used in determining the path calculation across the client network. In some aspects, the UNI carries information from the server layer to the client layer that can be used as path computation constraints. In some aspects, parameters are passed to the optical layer for an informed traffic engineering path computation. The one or more parameter provided is described above and/or below.

In some examples, this additional information is passed over the UNI with a signaling protocol. For example, the signaling protocol is an extension to a GMPLS protocol. In some examples, the signaling protocol used for the additional information is Resource ReserVation Protocol - Traffic Engineering (RSVP-TE) signaling protocol. The additional information may be in a defined extension to RSVP-TE.

In some examples, the signaling protocol is the same over the UNI and in the server layer, e.g. RSVP-TE. For example, the signaling protocol over the UNI is also the GMPLS signaling protocol. The UNI may be referred to as a GMPLS UNI. Optionally, a routing protocol is used over the UNI, which in some examples is also the GMPLS routing protocol (i.e. OSPF-TE).

The path calculation entity (PCE) calculates the path in the client network. The path in the client network is calculated with information about the server network, as described.

This allows for an improved path calculation; by taking into account both the client layer and the server layer. The client layer PCE does not require communication with another PCE (i.e. for the server layer). The client layer PCE does not need to acquire detailed topology information for different layers, i.e. the client layer and server. Aspects of the invention provide for a PCE for a single layer to obtain only some information, e.g. summarized information, about another layer, in order to perform improved path calculation in that single layer.

In the case of an SDN controller, the PCE is an application running in the SDN controller. In the case of a distributed control plane, the PCE may be a centralized entity that receives queries from nodes for path computations or may be distributed on the nodes. In the latter case, each PCE only computes the paths that are originated by the node it is running on.

Examples of the invention relate to a control plane for the client network and/or server network 31. In some examples, the control plane is implemented by a software defined network (SDN) controller for an IP or WDM network (i.e. server network 31). The SDN controller is implemented in a computer program executed by a processor, and in some aspects, is implemented as a computer program product. Examples of the invention relate to a processor, and optionally storage, configured to execute the functions of the control plane or SDN controller. The processor may be in a network node, network element or device connected to the network.

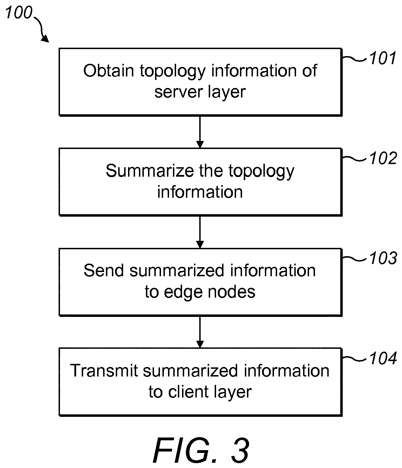

Figure 3 shows an illustration of a method 100 according to an example of the invention. The method is carried out by the server layer network 31, and in some aspects, by a control plane of the server layer network 31.

In 101, the method determines obtains information from the server layer. The information relates to the topology of the server layer. The information corresponds to the one or more parameter described, to be transmitted to the client layer to provide for improved routing in the client layer. In some examples, the information is obtained by a centralized entity of the server layer, e.g. a server layer PCE or NMS.

In 102, the method summarizes the information. The summarization is for each link between edge nodes of the server layer network which are connected with the client layer. This provides information in the form of a single value of each parameter for each logical link between edge nodes of the server layer. In some examples, the summarization is done by the same centralized entity as received the server layer topology information.

In 103 and 104, the method transmits the summarized information to the client layer. The method may comprise initially transmitting (e.g. flooding) 103 the summarized information to the edge nodes of the server layer. From the edge nodes of the server layer, the summarized information is transmitted 104 to the client layer, e.g. across the UNI.

Alternatively, the information is transmitted 104 directly from the centralized entity of the server layer to the client layer (e.g. to the client layer PCE). In this case, any means may be used to transmit the information. In this example, the information is not initially transmitted to the edge nodes of the server layer.

Any feature described in any example may be applicable to the method in the server layer.

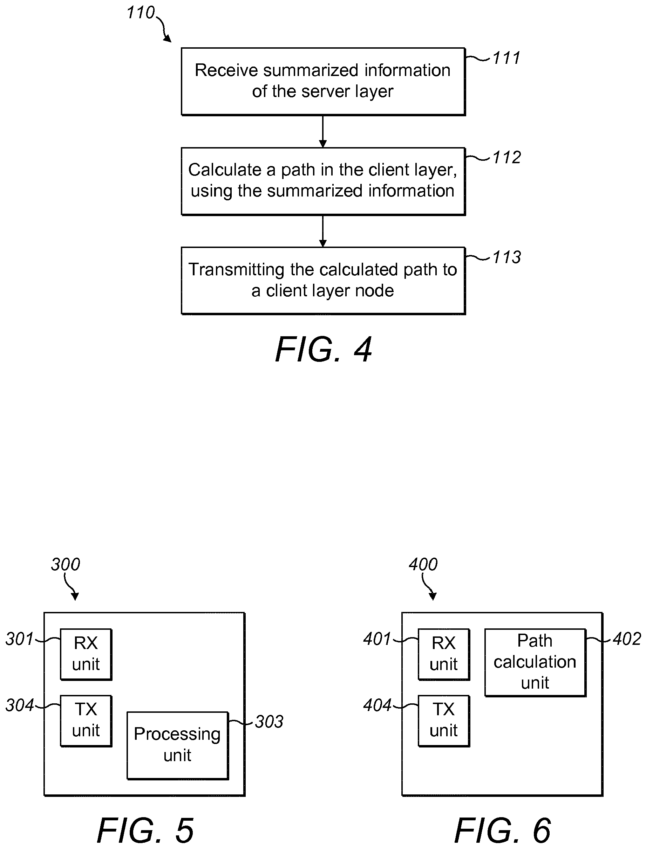

Figure 4 shows an example of a method 110 carried out by the client layer network 21, and in some aspects, by the control plane of the client layer network 21. The method 110 comprises receiving information 111 corresponding to one or more parameter from the server layer. In some examples, the information is received over the UNI or using PCE-P. For example, the information is included in signalling, i.e. in a signalling protocol. The information is transmitted continuously, at predefined intervals or events, or on demand from the server network.

The method 110 further comprises calculating a path 112 in the client layer, using the received information about the server layer. The received information about the server layer allows the client layer path calculation to select one or more edge nodes of the server layer to use for the path.

In some aspects, the method 110 further comprises transmitting 113 the calculated path to one or more nodes of the client layer, in order to set up the calculated path.

Any feature described in any example may be applicable to the method in the client layer.

Figure 5 shows an example apparatus 300 configured to function in accordance with any example of the invention. For example, the apparatus 300 is an apparatus of the server network, e.g. a PCE or SDN controller. The apparatus 300 is described as having logical functions. The apparatus 300 is part of a network element or node functionally connected to the server layer network.

A receiving unit 301 is configured to obtain an indication of the server layer topology, corresponding to the one or more parameters to be transmitted to the client layer. For example, the receiving unit 301 receives the bandwidth, QoS, protection type and/or granularity from nodes of the server layer.

The apparatus 300 comprises a processing unit 303. In some aspects, the processing unit 303 is configured to summarize the topology information received, to generate the summarized information on the one or more parameters to be transmitted to the client layer PCE.

A transmission unit 304 is configured to transmit the summarized information. The summarized information is transmitted to the edge nodes of the server layer, or to the client layer.

Any feature described in any example may be applicable to the apparatus in the server layer.

Figure 6 shows an example apparatus 400 configured to function in accordance with any example of the invention. For example, the apparatus 400 is a SDN controller. The apparatus 400 is described as having logical functions. The apparatus 400 is part of a network element or node functionally connected to the client layer network.

The apparatus comprises a receiving unit 401. In some examples, the receiving unit is configured to receive the summarized information from a node of the client layer, the information having been transmitted from the server layer, e.g. across the UNI from an edge node of the server layer. For example, the information is received via an edge node of the server layer. The information may be passed directly from the edge node of the server layer to the receiving unit, or passed from the edge node of the server layer to a node (e.g. edge node) of the client layer, optionally to one or more further nodes of the client layer, before being transmitted to the receiving unit 401. In some examples, the receiving unit may receive the summarized information from a node of the client layer or any entity of the server layer, e.g. using PCE-P.

Optionally, the apparatus 400 further comprises a path calculation unit 402 configured to calculate paths across the client layer network and to connect to the optical server network. Alternatively, the apparatus 400 transmits the received information about the server layer to the client layer PCE in order for a client layer path to be calculated.

The apparatus comprises a transmission unit 404 configured to transmit the calculated path to a node of the client layer.

The above units are functional only, and are not limited to separate functional units. One or more units may be combined. The functions of one or more units may be carried out by separate units. The functions of the apparatus may be implemented in software, firmware and/or hardware. The apparatus may be configured to implement any feature described.

The information of the parameters passed from the second layer to the first layer has been described as summarized information. In some examples, this is not an essential feature, and one or more other features described may define the invention in any combination.

Examples of the invention provide a transport layer with an efficient path computation in case of multiple domains (multiple layers), in particular, based on heterogeneous technologies e.g. packet and optical.

Aspects of the present invention may comprise a computer program or computer program product, configured to run on a computer or processing unit, to carry out at least some of the functions described. The computer program may run on the processing unit of the apparatus. In some examples, the apparatus may be implemented in a network node, management system, or in any apparatus connected to the network.

Examples of the invention may be implemented in any node, server, network management system (NMS) or Software-defined networking (SDN) controller. Examples of the invention may be implemented as a library or an application. An apparatus and method according to an example of the invention may relate to the client layer only, the server only, or a combination of the client layer and server.

One or more functions of the apparatus or steps of the method may be performed at a separate apparatus or a separate time. Any described method or apparatus may be combined with any other described method or apparatus. Any aspect of any embodiment may be combined with any feature of any other embodiment.

## Claims

1. A method (110) of calculating a path in a first layer of a multi-layer network, the method (110) comprising:
receiving (111) information, corresponding to a plurality of parameters, from a second layer of the multi-layer network,
wherein the plurality of parameters correspond to summarized links between edge nodes of the second layer connected with the first layer; and
calculating (112) a path in the first layer using the information received from the second layer,
wherein the plurality of parameters comprise a parameter of total bandwidth between the edge nodes of the second layer and a parameter of Quality of Service, QoS, between the edge nodes of the second layer.

2. The method (110) as claimed in claim 1, wherein the method (110) is in a client-server multi-layer network, and wherein the first layer is a client layer and the second layer is a server layer.

3. The method (110) as claimed in claim 1 or 2, comprising receiving the information from an edge node of the second layer, and the method (110) optionally comprising:
obtaining (101), by an entity of the second layer, information corresponding to the plurality of parameters from the second layer;
summarizing (102), by the entity of the second layer, the information for the summarized links between the edge nodes of the second layer; and
transmitting (104), by the entity of the second layer, the summarized information,
corresponding to the plurality of parameters, to the edge nodes of the second layer.

4. The method (110) as claimed in any one of the preceding claims, wherein the plurality of parameters further comprise a parameter of protection information type between the edge nodes of the second layer.

5. The method (110) as claimed in any one of the preceding claims, wherein the plurality of parameters further comprise a parameter of bandwidth granularity between the edge nodes of the second layer.

6. The method (110) as claimed in any one of claims 1 to 5, wherein the bandwidth granularity between the edge nodes of the second layer is calculated in the first layer.

7. The method (110) as claimed in any one of the preceding claims, wherein the information, corresponding to the plurality of parameters, is received by the first layer over a User Network Interface, UNI, from the second layer.

8. The method (110) as claimed in any one of the preceding claims, wherein the information, corresponding to the plurality of parameters, is received by the first layer using a Path Calculation Entity Protocol, PCE-P, from the second layer.

9. The method (110) as claimed in any one of the preceding claims, wherein:
the path is calculated in the first layer by a first Path Calculation Entity, PCE, and
a path is calculated in the second layer by a second PCE.

10. An apparatus (400) configured to determine a path in a first layer of a multi-layer network, the apparatus (400) comprising:
a receiving unit (401) configured to receive information, corresponding to a plurality of parameters, from a second layer of the multi-layer network,
wherein the plurality of parameters correspond to summarized links between edge nodes of the second layer connected with the first layer; and
a path calculation unit (402) configured to calculate a path in the first layer using the information received from the second layer,
wherein the plurality of parameters comprise a parameter of total bandwidth between the edge nodes of the second layer and a parameter of Quality of Service, QoS, between the edge nodes of the second layer.

11. A method (100) for a second layer of a multi-layer network, the method (100) comprising:
obtaining (101) information, corresponding to a plurality of parameters, from the second layer;
summarizing (102) the information for summarized links between edge nodes of the second layer connected with the first layer; and
transmitting (104) the summarized information, corresponding to the plurality of parameters, to a first layer of the multi-layer network, wherein the information is useable for calculating a path in the first layer,
wherein the plurality of parameters comprise a parameter of total bandwidth between the edge nodes of the second layer and a parameter of Quality of Service, QoS, between the edge nodes of the second layer, the plurality of parameters corresponding to the summarized links between the edge nodes of the second layer connected with the first layer.

12. The method (100) as claimed in claim 11, wherein an entity of the second layer obtains the information, corresponding to the plurality of parameters, from the second layer wherein the entity summarizes the information for the summarized links between the edge nodes of the second layer, and wherein the entity transmits the summarized information, corresponding to the plurality of parameters, to the edge nodes of the second layer.

13. An apparatus (300) configured to provide information of a second layer of a multi-layer network,
the apparatus (300) comprising:
a receiving unit (301) configured to obtain information, corresponding to a plurality of parameters, from the second layer;
a calculation unit (303) configured to summarize the information for summarized links between edge nodes of the second layer connected with the first layer; and
a transmission unit (304) configured to transmit the summarized information,
corresponding to the plurality of parameters, to a first layer of the multi-layer network,
wherein the information is useable for calculating a path in the first layer,
wherein the plurality of parameters comprise a parameter of total bandwidth between the edge nodes of the second layer and a parameter of Quality of Service, QoS, between the edge nodes of the second layer, the plurality of parameters corresponding to the summarized links between the edge nodes of the second layer connected with the first layer.

14. A control plane protocol of a first layer of a multi-layer network, wherein the control plane protocol is configured to carry information, corresponding to a plurality of parameters, from a second layer of the multi-layer network,
wherein the plurality of parameters correspond to summarized links between edge nodes of the second layer connected with the first layer,
wherein the information is useable for calculating a path in the first layer, and
wherein the plurality of parameters comprise a parameter of total bandwidth between the edge nodes of the second layer and a parameter of Quality of Service, QoS, between the edge nodes of the second layer.

15. A computer program product, configured, when run on a computer, to conduct the method (110) according to any one of claims 1 to 9.

## Patentansprüche

1. Verfahren (110) zur Berechnung eines Pfades in einer ersten Schicht eines mehrschichtigen Netzwerks, das Verfahren (110) umfassend:
Empfangen (111) von Informationen, die einer Vielzahl von Parametern entsprechen, von einer zweiten Schicht des mehrschichtigen Netzwerks,
wobei die Vielzahl von Parametern zusammengefassten Verbindungen zwischen Randknotenpunkten der zweiten Schicht, die mit der ersten Schicht verbunden sind, entspricht; und
Berechnen (112) eines Pfades in der ersten Schicht mittels der von der zweiten Schicht empfangenen Informationen,
wobei die Vielzahl von Parametern einen Parameter gesamter Bandbreite zwischen den Randknotenpunkten der zweiten Schicht und einen Parameter für Dienstgüte, QoS, zwischen den Randknotenpunkten der zweiten Schicht umfasst.

2. Verfahren (110) nach Anspruch 1, wobei das Verfahren (110) in einem mehrschichtigen Client-Server-Netzwerk ist, und wobei die erste Schicht eine Client-Schicht ist und die zweite Schicht eine Server-Schicht ist.

3. Verfahren (110) nach Anspruch 1 oder 2, das Empfangen der Informationen von einem Randknotenpunkt der zweiten Schicht umfassend und das Verfahren (110) optional umfassend:
Empfangen (101), durch eine Einheit der zweiten Schicht, von Informationen, die der Vielzahl von Parametern entsprechen, von der zweiten Schicht;
Zusammenfassen (102) der Information für die zusammengefassten Verbindungen zwischen den Randknotenpunkten der zweiten Schicht durch die Einheit der zweiten Schicht; und
Übertragen (104) der zusammengefassten Informationen, die der Vielzahl von Parametern entsprechen, durch die Einheit der zweiten Schicht an die Randknotenpunkte der zweiten Schicht.

4. Verfahren (110) nach einem der vorhergehenden Ansprüche, wobei die Vielzahl von Parametern ferner einen Parameter des Schutzinformationstyps zwischen den Randknotenpunkten der zweiten Schicht umfasst.

5. Verfahren (110) nach einem der vorhergehenden Ansprüche, wobei die Vielzahl von Parametern ferner einen Parameter der Bandbreitengranularität zwischen den Randknotenpunkten der zweiten Schicht umfasst.

6. Verfahren (110) nach einem der Ansprüche 1 bis 5, wobei die Bandbreitengranularität zwischen den Randknotenpunkten der zweiten Schicht in der ersten Schicht berechnet wird.

7. Verfahren (110) nach einem der vorhergehenden Ansprüche, wobei die Informationen, die der Vielzahl von Parametern entsprechen, durch die erste Schicht über eine Nutzernetzwerkschnittstelle, UNI, von der zweiten Schicht empfangen werden.

8. Verfahren (110) nach einem der vorhergehenden Ansprüche, wobei die Informationen, die der Vielzahl von Parametern entsprechen, durch die erste Schicht über ein Pfadberechnungseinheitsprotokoll, PCE-P, von der zweiten Schicht empfangen werden.

9. Verfahren (110) nach einem der vorhergehenden Ansprüche, wobei:
der Pfad in der ersten Schicht von einer Pfadberechnungseinheit, PCE, berechnet wird, und ein Pfad in der zweiten Schicht von einer zweiten PCE berechnet wird.

10. Vorrichtung (400), die dazu konfiguriert ist, dass sie einen Pfad in einer ersten Schicht eines mehrschichtigen Netzwerks bestimmt, die Vorrichtung (400) umfassend:
eine Empfängereinheit (401), die dazu konfiguriert ist, dass sie Informationen empfängt, die einer Vielzahl von Parametern entsprechen, von einer zweiten Schicht des mehrschichtigen Netzwerks,
wobei die Vielzahl von Parametern zusammengefassten Verbindungen zwischen Randknotenpunkten der zweiten Schicht, die mit der ersten Schicht verbunden sind, entspricht; und
Pfadberechnungseinheit (402), die dazu konfiguriert ist, dass sie einen Pfad in der ersten Schicht mittels der von der zweiten Schicht empfangenen Informationen berechnet,
wobei die Vielzahl von Parametern einen Parameter gesamter Bandbreite zwischen den Randknotenpunkten der zweiten Schicht und einen Parameter für Dienstgüte, QoS, zwischen den Randknotenpunkten der zweiten Schicht umfasst.

11. Verfahren (100) für
eine zweite Schicht eines mehrschichtigen Netzwerks, das Verfahren (100) umfassend:
Erhalten (101) von Informationen, die einer Vielzahl von Parametern entsprechen, von der zweiten Schicht;
Zusammenfassen (102) der Informationen für zusammengefasste Verknüpfungen zwischen Randknotenpunkten der zweiten Schicht, die mit der ersten Schicht verbunden sind; und
Übertragen (104) der zusammengefassten Informationen, die der Vielzahl von Parametern entsprechen, an eine erste Schicht des mehrschichtigen Netzwerks, wobei die Informationen für das Berechnen eines Pfades in der ersten Schicht nutzbar sind,
wobei die Vielzahl von Parametern einen Parameter gesamter Bandbreite zwischen den Randknotenpunkten der zweiten Schicht und einen Parameter für Dienstgüte, QoS, zwischen den Randknotenpunkten der zweiten Schicht umfasst, wobei die Vielzahl von Parametern den zusammengefassten Verknüpfungen zwischen den Randknotenpunkten der zweiten Schicht, die mit der ersten Schicht verbunden sind, entspricht.

12. Verfahren (100) nach Anspruch 11, wobei eine Einheit der zweiten Schicht die Informationen, die der Vielzahl von Parametern entsprechen, von der zweiten Schicht erhält, wobei die Einheit die Informationen für die zusammengefassten Verknüpfungen zwischen den Randknotenpunkten der zweiten Schicht zusammenfasst, und wobei die Einheit die zusammengefassten Informationen, die der Vielzahl von Parametern entsprechen, an die Randknotenpunkte der zweiten Schicht überträgt.

13. Vorrichtung (300), die dazu konfiguriert ist, dass sie Informationen einer zweiten Schicht eines mehrschichtigen Netzwerks bereitstellt,
die Vorrichtung (300) umfassend:
eine Empfängereinheit (301), die dazu konfiguriert ist, dass sie von der zweiten Schicht Informationen erhält, die einer Vielzahl von Parametern entsprechen;
Berechnungseinheit (303), die dazu konfiguriert ist, dass sie die Informationen für zusammengefasste Verknüpfungen zwischen Randknotenpunkten der zweiten Schicht, die mit der ersten Schicht verbunden sind, zusammenfasst; und
Übertragungseinheit (304), die dazu konfiguriert ist, dass sie die zusammengefassten Informationen, die der Vielzahl von Parametern entsprechen, an eine erste Schicht des mehrschichtigen Netzwerks überträgt,
wobei die Informationen für das Berechnen eines Pfades in der ersten Schicht nutzbar sind,
wobei die Vielzahl von Parametern einen Parameter gesamter Bandbreite zwischen den Randknotenpunkten der zweiten Schicht und einen Parameter für Dienstgüte, QoS, zwischen den Randknotenpunkten der zweiten Schicht umfassen, wobei die Vielzahl von Parametern den zusammengefassten Verknüpfungen zwischen den Randknotenpunkten der zweiten Schicht entsprechen, die mit der ersten Schicht verbunden sind.

14. Steuerebenenprotokoll einer ersten Schicht eines mehrschichtigen Netzwerks, wobei das Steuerebenenprotokoll dazu konfiguriert ist, dass es Informationen, die einer Vielzahl von Parametern entsprechen, von einer zweiten Schicht des mehrschichtigen Netzwerks befördert,
wobei die Vielzahl von Parametern zusammengefassten Verknüpfungen zwischen Randknotenpunkten der zweiten Schicht, die mit der ersten Schicht verknüpft sind, entspricht,
wobei die Informationen für das Berechnen eines Pfades in der ersten Schicht nutzbar sind, und
wobei die Vielzahl von Parametern einen Parameter gesamter Bandbreite zwischen den Randknotenpunkten der zweiten Schicht und einen Parameter für Dienstgüte, QoS, zwischen den Randknotenpunkten der zweiten Schicht umfasst.

15. Computerprogrammprodukt, das dazu konfiguriert ist, dass es, wenn auf einem Computer ausgeführt, das Verfahren (110) nach einem der Ansprüche 1 bis 9 durchführt.

## Revendications

1. Procédé (110) de calcul d'un trajet dans une première couche d'un réseau multicouche, le procédé (110) comprenant :
la réception (111) d'informations, correspondant à une pluralité de paramètres, à partir d'une seconde couche du réseau multicouche,
dans lequel la pluralité de paramètres correspond à des liens résumés entre des nœuds de bord de la seconde couche reliée à la première couche ; et
le calcul (112) d'un trajet dans la première couche à l'aide des informations reçues à partir de la seconde couche,
dans lequel la pluralité de paramètres comprend un paramètre de bande passante totale entre les nœuds de bord de la seconde couche et un paramètre de qualité de service, QoS, entre les nœuds de bord de la seconde couche.

2. Procédé (110) selon la revendication 1, dans lequel le procédé (110) se trouve dans un réseau multicouche client-serveur, et dans lequel la première couche est une couche client et la seconde couche est une couche serveur.

3. Procédé (110) selon la revendication 1 ou 2, comprenant la réception des informations à partir d'un nœud de bord de la seconde couche, et le procédé (110) comprenant éventuellement :
l'obtention (101), par une entité de la seconde couche, d'informations correspondant à la pluralité de paramètres à partir de la seconde couche ;
le résumé (102), par l'entité de la seconde couche, des informations sur les liens résumés entre les nœuds de bord de la seconde couche ; et
la transmission (104), par l'entité de la seconde couche, des informations résumées, correspondant à la pluralité de paramètres, aux nœuds de bord de la seconde couche.

4. Procédé (110) selon l'une quelconque des revendications précédentes, dans lequel la pluralité de paramètres comprend en outre un paramètre de type d'informations de protection entre les nœuds de bord de la seconde couche.

5. Procédé (110) selon l'une quelconque des revendications précédentes, dans lequel la pluralité de paramètres comprend en outre un paramètre de granularité de bande passante entre les nœuds de bord de la seconde couche.

6. Procédé (110) selon l'une quelconque des revendications 1 à 5, dans lequel la granularité de bande passante entre les nœuds de bord de la seconde couche est calculée dans la première couche.

7. Procédé (110) selon l'une quelconque des revendications précédentes, dans lequel les informations, correspondant à la pluralité de paramètres, sont reçues par la première couche sur une interface de réseau utilisateur, UNI, à partir de la seconde couche.

8. Procédé (110) selon l'une quelconque des revendications précédentes, dans lequel les informations, correspondant à la pluralité de paramètres, sont reçues par la première couche à l'aide d'un protocole d'entité de calcul de trajet, PCE-P, à partir de la seconde couche.

9. Procédé (110) selon l'une quelconque des revendications précédentes, dans lequel :
le trajet est calculé dans la première couche par une première entité de calcul de trajet, PCE, et un trajet est calculé dans la seconde couche par une seconde PCE.

10. Appareil (400) configuré pour déterminer un trajet dans une première couche d'un réseau multicouche, l'appareil (400) comprenant :
une unité de réception (401) configurée pour recevoir des informations, correspondant à une pluralité de paramètres, à partir d'une seconde couche du réseau multicouche,
dans lequel la pluralité de paramètres correspond à des liens résumés entre des nœuds de bord de la seconde couche reliée à la première couche ; et
une unité de calcul de trajet (402) configurée pour calculer un trajet dans la première couche à l'aide des informations reçues à partir de la seconde couche,
dans lequel la pluralité de paramètres comprend un paramètre de bande passante totale entre les nœuds de bord de la seconde couche et un paramètre de qualité de service, QoS, entre les nœuds de bord de la seconde couche.

11. Procédé (100) pour une seconde couche d'un réseau multicouche, le procédé (100) comprenant :
l'obtention (101) d'informations, correspondant à une pluralité de paramètres, à partir de la seconde couche ;
le résumé (102) des informations sur les liens résumés entre des nœuds de bord de la seconde couche reliée à la première couche ; et
la transmission (104) des informations résumées, correspondant à la pluralité de paramètres, à une première couche du réseau multicouche, dans lequel les informations peuvent être utilisées pour calculer un trajet dans la première couche,
dans lequel la pluralité de paramètres comprend un paramètre de bande passante totale entre les nœuds de bord de la seconde couche et un paramètre de qualité de service, QoS, entre les nœuds de bord de la seconde couche, la pluralité de paramètres correspondant aux liens résumés entre des nœuds de bord de la seconde couche reliée à la première couche.

12. Procédé (100) selon la revendication 11, dans lequel une entité de la seconde couche obtient les informations, correspondant à la pluralité de paramètres, à partir de la seconde couche dans lequel l'entité résume les informations sur les liens résumés entre les nœuds de bord de la seconde couche, et dans lequel l'entité transmet les informations résumées, correspondant à la pluralité de paramètres, aux nœuds de bord de la seconde couche.

13. Appareil (300) configuré pour fournir des informations d'une seconde couche d'un réseau multicouche,
l'appareil (300) comprenant :
une unité de réception (301) configurée pour obtenir des informations, correspondant à une pluralité de paramètres, à partir de la seconde couche ;
une unité de calcul (303) configurée pour résumer les informations sur les liens résumés entre des nœuds de bord de la seconde couche reliée à la première couche ; et
une unité de transmission (304) configurée pour transmettre les informations résumées, correspondant à la pluralité de paramètres, à une première couche du réseau multicouche,
dans lequel les informations peuvent être utilisées pour calculer un trajet dans la première couche,
dans lequel la pluralité de paramètres comprend un paramètre de bande passante totale entre les nœuds de bord de la seconde couche et un paramètre de qualité de service, QoS, entre les nœuds de bord de la seconde couche, la pluralité de paramètres correspondant aux liens résumés entre les nœuds de bord de la seconde couche reliée à la première couche.

14. Protocole de plan de commande d'une première couche d'un réseau multicouche, dans lequel le protocole de plan de commande est configuré pour transporter des informations, correspondant à une pluralité de paramètres, à partir d'une seconde couche du réseau multicouche,
dans lequel la pluralité de paramètres correspond à des liens résumés entre des nœuds de bord de la seconde couche reliée à la première couche,
dans lequel les informations peuvent être utilisées pour calculer un trajet dans la première couche, et
dans lequel la pluralité de paramètres comprend un paramètre de bande passante totale entre les nœuds de bord de la seconde couche et un paramètre de qualité de service, QoS, entre les nœuds de bord de la seconde couche.

15. Produit de programme informatique, configuré, lorsqu'il est exécuté sur un ordinateur, pour réaliser le procédé (110), selon l'une quelconque des revendications 1 à 9.
